# EUROPÄISCHE PATENTSCHRIFT

(11) **EP 1 044 722 B1**
(45) Veröffentlichungstag und Bekanntmachung des Hinweises auf die Patenterteilung: **08.05.2002**
(21) Anmeldenummer: 99123674.6
(22) Anmeldetag: 07.08.1994
(51) Int. Cl.: B03B 9/06

(54) **Verfahren zum Zerlegen und sortenreinen Trennen von zu recyclierenden Dreistoff-Verbundteilen**
Method for the decomposition and separation of recyclable three-material composite components by type
Procédé pour la décomposition et la séparation par types, des éléments de construction composites recyclables à trois matières

(43) Veröffentlichungstag der Anmeldung: 18.10.2000
(62) Teilanmeldung aus: 94112347.3
(73) Patentinhaber: INPRO Innovationsgesellschaft für fortgeschrittene Produktionssysteme in der Fahrzeugindustrie mbH, 10587 Berlin (DE)
(72) Erfinder: Windelen-Hoyer, Ursel, Dr., 10587 Berlin (DE); Rogos, Jürgen, Dr., 14089 Berlin (DE); Peters, Katja, 10587 Berlin (DE); Pan, Quing, 10587 Berlin (DE); Minkow, Michael, 10587 Berlin (DE)
(74) Vertreter: Hoffmann, Klaus-Dieter, Dipl.-Ing.

(56) Entgegenhaltungen:
- EP-A- 0 473 990
- DE-C- 4 216 638
- DE-U- 9 309 107

## Beschreibung

Die Erfindung betrifft ein Verfahren zum Zerlegen und sortenreinen Trennen von zu recyclierenden Dreistoff-Verbundteilen mit einem den größten Masseanteil aufweisenden und den Träger bildenden Hartkunststoff (PP-T 30), einer auf dem Träger festhaftend aufgebrachten Zwischenlage aus Schaumstoff und einer auf letzterer außenseitig festhaftend aufgebrachter, flexibler Folie, indem die Verbundteile in mindestens einer Arbeitsstufe zu einem ungetrennten Verbund mittels einer Schneidmühle mit Siebeinlage vorzerkleinert, darauf zu einem getrennten Verbund maschinell zerkleinert und die resultierenden Werkstofffraktionen mindestens einer Werkstoffsortierung unterworfen, getrennt und dann aus dem Verfahrensablauf ausgeschieden und/oder weiterverarbeitet werden.

Bei der Folie der zu reclycierenden Dreistoff-Verbundteile, die konstruktiv kombiniert und insbesondere im Innenraum von Fahrzeugen zu finden sind, handelt es sich in der Regel auch um Verbundsysteme, die drei oder mehr Schichten verschiedener Materialien aufweisen wie z.B. Decklack, Gemisch aus Acrylbutadienstyrol (ABS) und Polyvinylchlorid (PVC) sowie Haftvermittler.

Ein nach der DE 42 16 638 bekanntes Verfahren der eingangs erwähnten Art soll dafür sorgen, daß sich alle beteiligten Kunststoff-Komponenten in einer für eine Wiederverwendung brauchbaren Sortenreinheit trennen lassen, ohne daß minderwertige oder nichtwiederverwendbare und demgemäß zu entsorgende Mischfraktionen anfallen und ohne, daß Änderungen an den Wertstoffen entstehen, die deren Wiederverwendbarkeit beeinträchtigen oder gar unmöglich machen.

Zu diesem Zweck wird gemäß der DE 42 16 638 C1 vorgeschlagen, daß zum Zerlegen und sortenreinen Trennen der Dreistoff-Verbundbauteile das selektive Zerkleinern des Schaums durch eine Prallbeanspruchung der Partikel erfolgt, und daß nach dem Entfernen der Schaumstoff-Fraktion das zunächst verbleibende Gemisch aus dickwandigen Hartkunststoffpartikeln und dünnwandigen Folienschnipseln mittels einer vertikalen, wirbelarmen Aufwindsichtung in eine Hartkunststoff-Fraktion und in eine Folienfraktion getrennt wird, wobei die auf einer luftdurchlässigen, etwa horizontalen Unterlage flach und einzeln, d.h. überlappungsfrei aufliegenden Partikel des Gemisches von unten durch einen annähernd vertikal aufsteigenden, wirbelarmen Luftstrom angeströmt werden, wobei nur die leichteren Folienschnipsel angehoben und nach oben fortgetragen und die zurückbleibenden Hartkunststoff-Partikel seitlich auf Siebniveau entfernt werden.

Alternativ wird nach der DE 42 16 638 C1 zum Zerlegen und sortenreinen Trennen der Dreistoff-Verbundbauteile angeregt, daß das selektive Zerkleinern des Schaums durch eine Prallbeanspruchung der Partikel erfolgt, und daß nach dem Entfernen der Schaumstoff-Fraktion das zunächst verbleibende Gemisch aus dickwandigen Hartkunststoffpartikeln und dünnwandigen Folienschnipseln mittels einer durch eine aufwärts gerichtete Luftströmung unterstützten Schwingsieb-Trennung in eine Hartkunststoff-Fraktion und in eine Folienfraktion getrennt wird, wobei auf die auf einem zur Horizontalen geneigten Schwingsieb, dessen Maschenweite deutlich kleiner als die Partikel des Gemisches ist, in einer ausgebreiteten Wirrlage aufgeschütteten Partikel ein zum höhergelegenen Rand des Schwingsiebs gerichteter Vibrationsfördereffekt ausgeübt und durch die aufwärts gerichtete Luftströmung die Auflagekraft der Partikel auf dem Schwingsieb und die siebseitig reibungsbedingt auf die Partikel ausübbare Schleppkraft reduziert wird, derart, daß der auf die leichteren Folienschnipsel ausgeübte Vibrationsfördereffekt deutlich geringer ist, als der auf die Hartkunststoffpartikel und daß demgemäß zum höhergelegenen Rand des Schwingsiebes lediglich die Hartkunststoffpartikel gefördert werden, wogegen über den tiefer gelegenen Rand des Schwingsiebs die Folienschnipsel ausgetragen werden.

Verfahren, die sich auf das Zerlegen und Trennen von Zweistoff-Verbundbauteilen beziehen, gehen z.B. aus der JP 32-3909 sowie aus der US 5 042 725 als bekannt hervor, wobei letzteres nur auf Zweistoff-Verbundbauteile mit einer Schaumkomponente beschränkt ist.

Die EP 4 22 460 A beschreibt weiterhin Verfahren zum Zerteilen und Sortieren der unterschiedlichen Kunststoffe von Stanzabfällen aus Fahrzeug-Armaturentafeln, die aus einer Basislage aus hydrophilem Polyurethanschaum und aus einer damit verbundenen Außenhaut aus hydrophober PVC-Folie bestehen. Danach soll im Anschluß an eine maschinelle Zerkleinerung unter dem Einfluß von Wasser der PUR-Schaumstoff aufquellen und sich von der Folie ablösen. Als problematisch kann sich bei diesem bekannten Verfahren herausstellen, ob die Kräfte, die durch die mit Wasser verursachte Aufquellung der Schaumreste auf die Klebeverbindung zwischen Schaumstoff und Folie ausgeübt werden können, in Anbetracht der Elastizität und Komprimierbarkeit des Schaumstoffs ausreichen werden, um die wesentlich höheren Klebekräfte überwinden zu können.

Die vorliegende Erfindung geht aus von der Zielstellung, ein Verfahren zum Zerlegen und sortenreinen Trennen von zu recyclierenden Verbundbauteilen gemäß der eingangs erwähnten Art auf der Basis einer vergleichenden Bewertung von Leistungskennziffern, die anhand praktischer Untersuchungen von Aufwand und Nutzen verschiedener Verwertungsweg z.B. für Stanzabfälle ermittelbar sind, für unterschiedliche strategische Zielvorgaben optimal zu gestalten. Solche Zielvorgaben sind :
a) Rückgewinnung des Kunststoffs/Werkstoffs mit dem höchsten Massenprozentsatz im Verbundteil in sortenreiner Form und/oder
b) Rückgewinnung mindestens mehrerer im Verbundbauteil eingesetzter Kunststoffe/Werkstoffe in sortenreiner Form und/oder
c) Heraustrennen von Kunststoffen/Werkstoffen, die wegen Schadstoffinhalten entsorgungspflichtig sind.

Der Erfindung liegt somit die Aufgabe zu Grunde, ein Verfahren der eingangs erwähnten Art so zu gestalten, daß im Vergleich zum Stand der Technik eine effektivere Zerlegung und sortenreine Trennung von zu recyclierenden Dreistoff-Verbundbauteilen unter Berücksichtigung der zuvor genannten Vorgaben erzielbar ist.

Diese Aufgabe wird erfindungsgemäß durch die aus dem Kennzeichen des Patentanspruchs hervorgehenden Verfahrensschritte gelöst.

Die für die genannten Zielvorgaben relevanten Leistungskennziffern können aus den nachfolgenden Tabelle A bzw. B ermittelt werden und die Werkstoffsortierung kann nach den aus der nachfolgenden Tabelle C hervorgehenden Kriterien erfolgen.

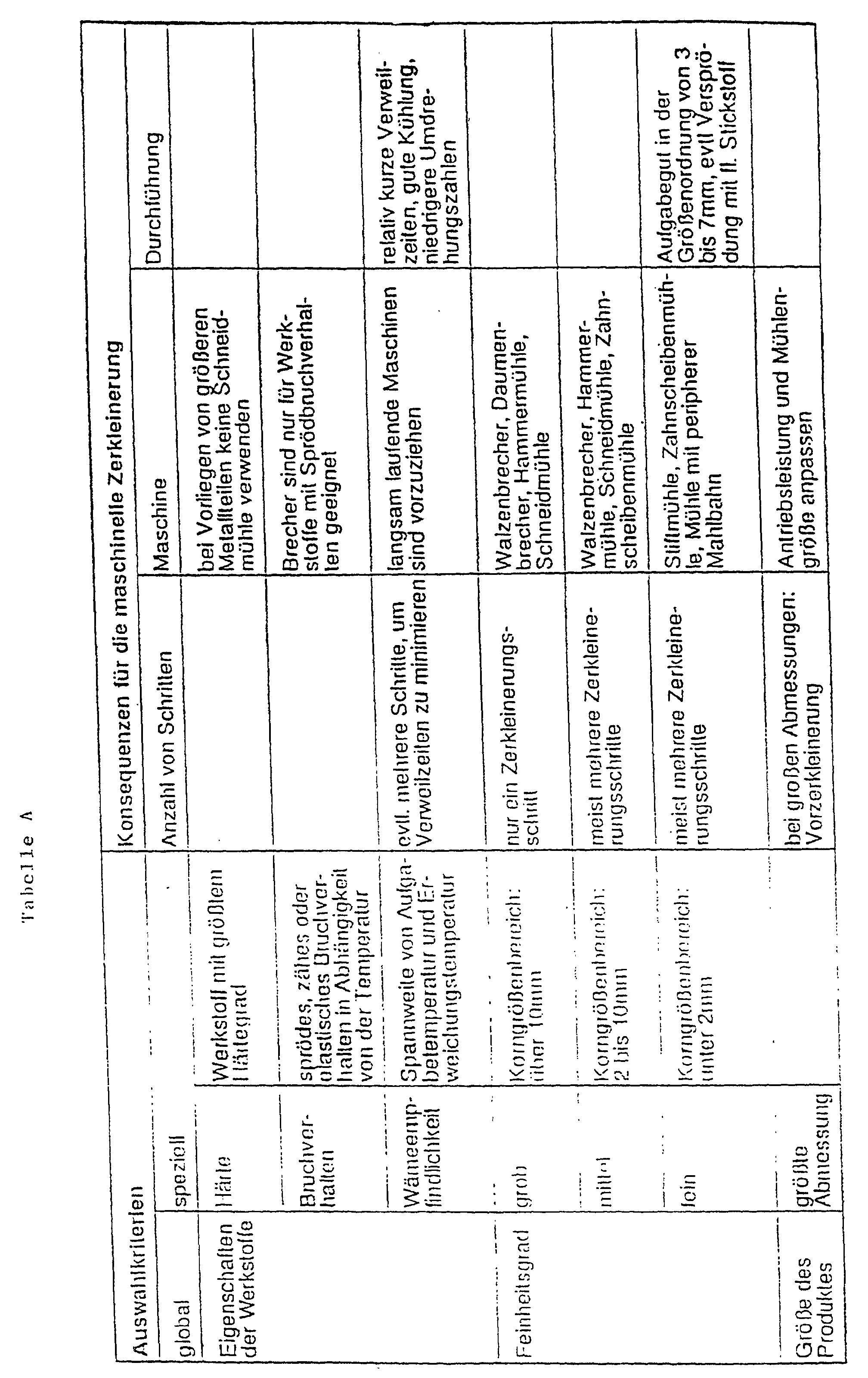

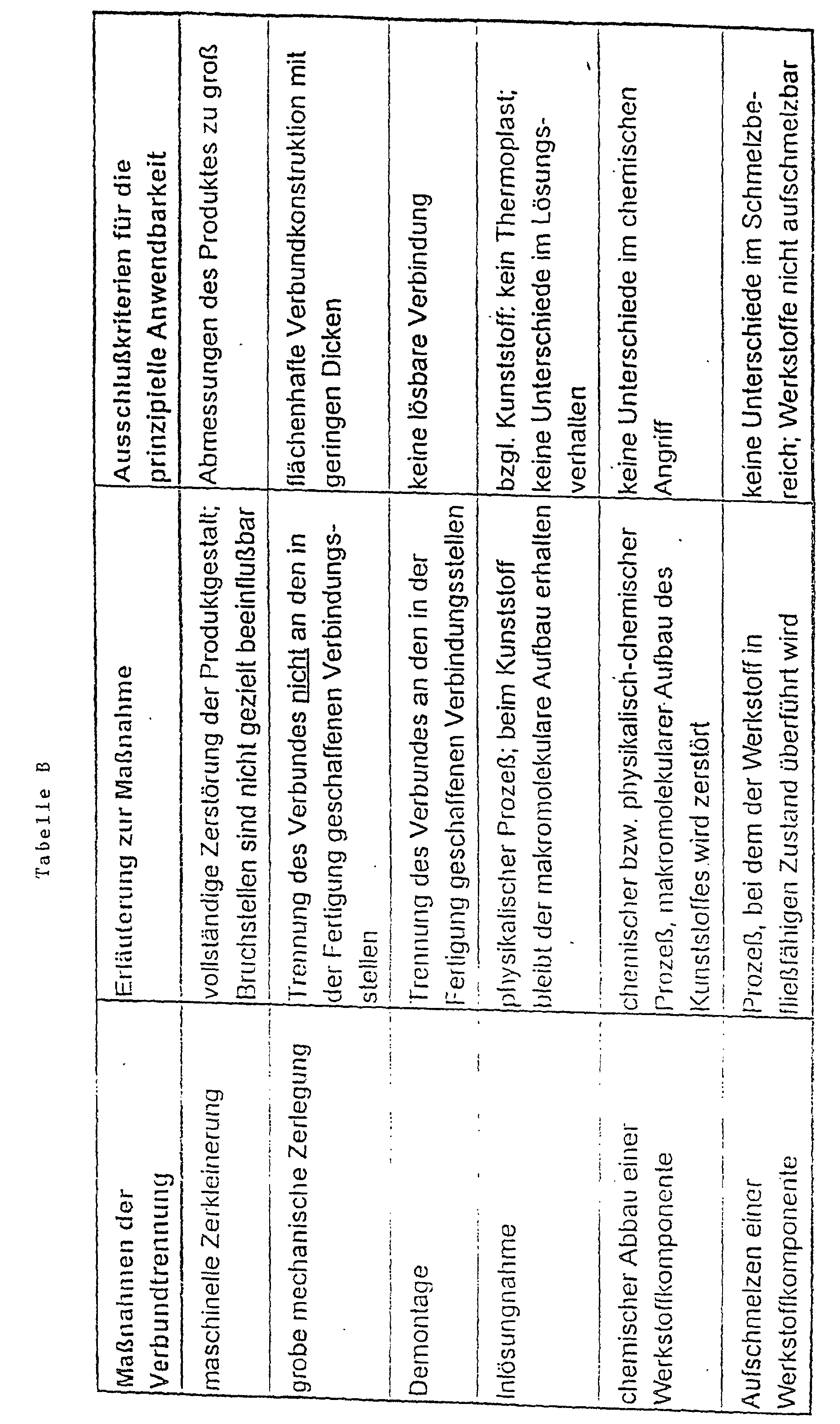

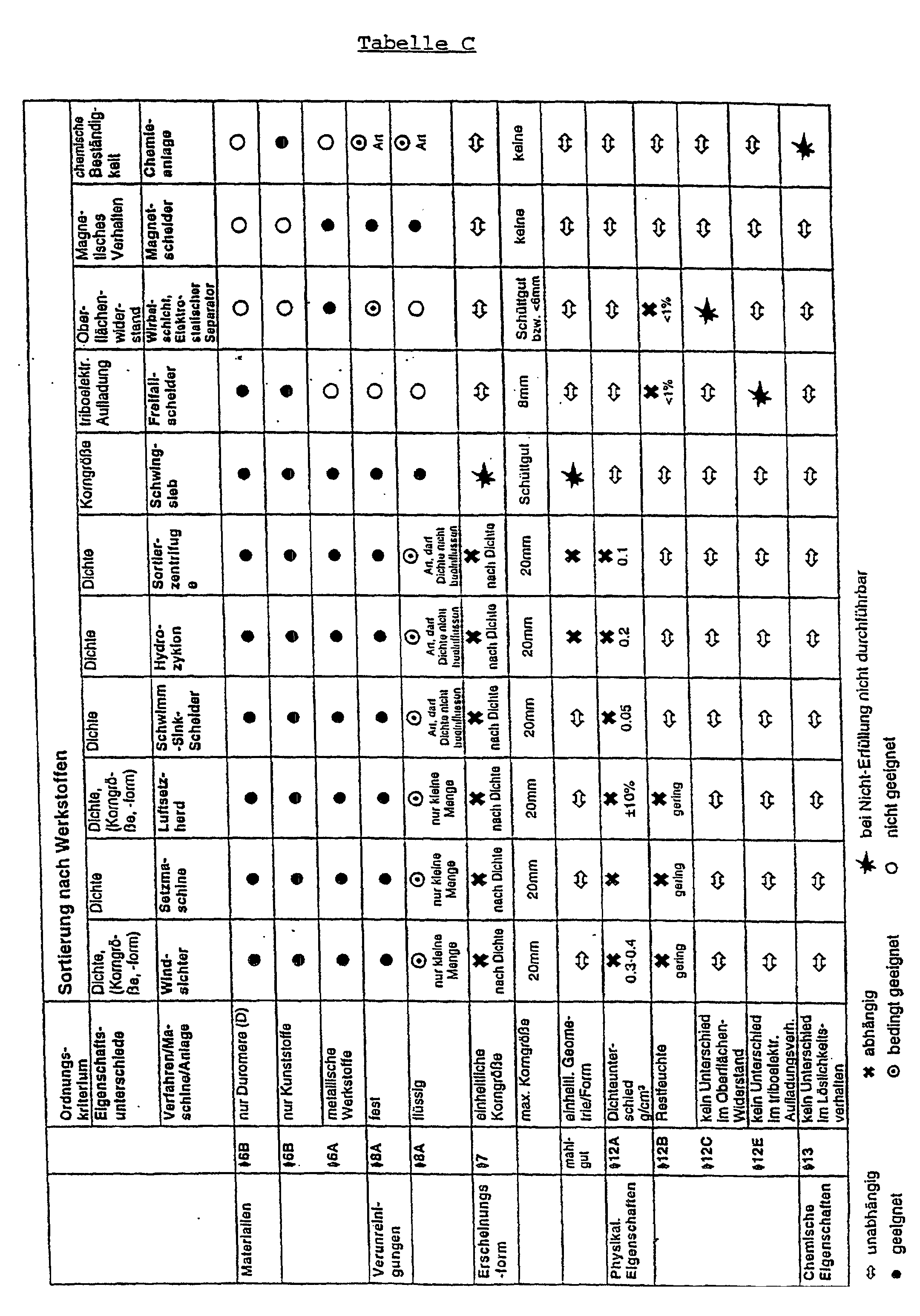

Die Ausscheidung und/oder Weiterverarbeitung der resultierenden Werkstofffraktionen kann unter Berücksichtigung der Ausschlußkriterien gemäß Tabelle D vollzogen werden.

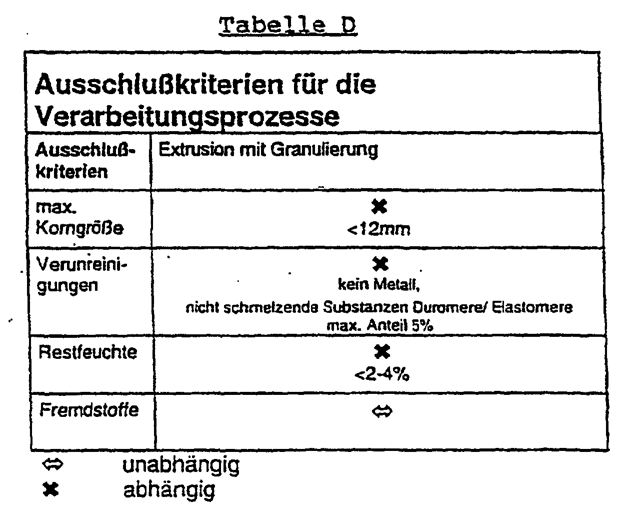

Das erfindungsgemäße Verfahren erweist sich insbesondere dadurch als vorteilhaft, daß unter Berücksichtigung der Vorgaben ein im Vergleich zum Stand der Technik höherer Nutzen erzielbar ist, wobei die resultierenden Materialqualitäten auch eine solche Ausgangsposition schaffen, daß eine erneute Verarbeitung (evtl. mit darin integrierten Aufwertungsmaßnahmen) in höherwertigen Produkten möglich ist.

Insbesondere bringt das erfindungsgemäße Verfahren zur Verbund- und Werkstofftrennung folgende Vorteile mit sich:
- Es wird ein guter Aufschluß- bzw. Verbundtrennungsgrad bezüglich der verschiedenen Kunststoffe/Werkstoffe aus dem Verbundbauteil erzielt (Größenordnung: mindestens 98 %), so daß Folien- und Hartkunststoffteile gar nicht oder nur noch geringfügig mit Schaumstoff behaftet sind.
- Entsprechend der gewünschten strategischen Zielvorgaben führt das erfindungsgemäße Verfahren zu der jeweils gewünschten Anzahl und Art von Kunststoff/Werkstofffraktionen mit hoher Sortenreinheit und hoher Ausbeute.
- Es handelt sich größtenteils um großtechnisch problemlos umsetzbare Verfahrensmaßnahmen, da bereits anderweitig bewährte Komponenten eingesetzt werden.
- Deponieraum und Entsorgungskosten werden eingespart sowie Ressourcen geschont.

Auch ist es mit der Erfindung möglich, bei Verbundbauteilen des o.g. Aufbaus den Haftvermittler der Folie zu lösen und damit eine vollständige Abtrennung des Schaumstoffs von der Folie zu erreichen.

Bei den Verbundbauteilen kann es sich um Alt-Teile aus zu verschrottenden Fahrzeugen oder um Ausschußteile aus der Produktion oder auch um Stanzabfälle bei der Produktion derart aufgebauter Verbundbauteile handeln. Es ist darauf hinzuweisen, daß insbesondere bei Altprodukten - abhängig vom Verschmutzungsgrad - die beschriebenen Verfahrensketten mit "nassen" Prozeßschritten zu bevorzugen sind.

Der Produktaufbau bestimmt im wesentlichen Anzahl und Art der in Frage kommenden Maschinen und Verfahren zur Trennung des Verbundes. Bei dem zur Anwendung auf Verbundbauteile ausgerichteten Bewertungsverfahren wird eine Aufteilung der Verwertungswege in Teilbereiche vorgenommen. Diese Teilbereiche sind Verbundtrennung, Sortierung, Zusatzprozesse (beispielsweise Waschen oder Trocknen) und Verarbeitung. Zur Ermittlung von praxisrelevanten Verfahrensschritten gemäß der Erfindung werden im Rahmen der vergleichenden Bewertung von Aufwand und Nutzen aufgestellte diesen Teilbereichen zugeordnete Ausschlußkriterien herangezogen, mit denen zunächst die Erstellung grober Ablaufschemata möglich ist. Aufgrund von Auswahlkriterien kann daran anschließend eine Verfeinerung der Ablaufschemata erfolgen. Nicht vorhandene Daten zur Durchführung und Bewertung werden an Beispielen aus der Produktions mit praktischen Untersuchungen ermittelt. Die Bewertung des Aufwands wird mit Hilfe eines Punktsystems vorgenommen, wobei die Differenz von einem Punkt einer bestimmten Kostenspanne zugeordnet ist. Auf diese Weise ergeben sich die Leistungskennziffern.

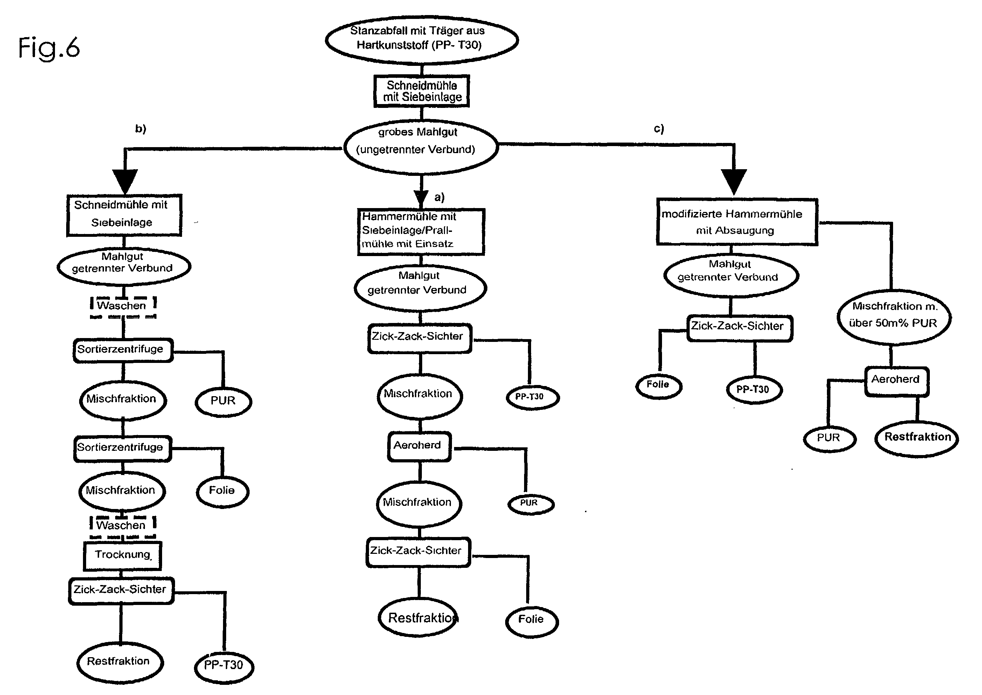

Die Erfindung wird nun anhand der Zeichnungen erläutert, in denen lediglich Fig. 6c ein Ausführungsbeispiel der Erfindung zeigt. In den Zeichnungen sind:
Fig. 1 ein ausschnittweiser Querschnitt durch ein aus drei unterschiedlichen Kunststoffen/Werkstoffen bestehendes Verbundteil, wobei die Folie selbst in der Regel auch ein Verbundteil darstellt,
Fig. 2 ein ausschnittweiser Querschnitt durch die Folie unter Annahme, daß es sich bei der Folie um ein beispielsweise dreischichtiges Verbundbauteil handelt,
Fig. 3 eine Verfahrenskette, die geeignet ist, das Trägermaterial als den Werkstoff mit dem höchsten Massenprozentanteil im Produkt in sortenreiner Form zurückzugewinnen, jeweils in Form eines Fließschemas,
Fig. 4a und b eine weitere Verfahrenskette, die geeignet ist, Folien- und Trägermaterial oder Schaumstoff und Trägermaterial sortenfrei zurückzugewinnen, jeweils in Form eines Fließschemas,
Fig. 5 eine schematische Darstellung einer allgemeinen Verfahrenskette für Produkte des Aufbaus nach Fig. 1 und 2 am Beispiel von Stanzabfällen,
Fig. 6a, b, und c weitere Verfahrensketten, die geeignet sind, Folien, Schaumstoff und Trägermaterial sortenrein zurückzugewinnen, jeweils in Form eines Fließschemas, wobei Fig. 6c allein ein Ausführungsbeispiel der Erfindung zeigt,
Fig. 7 eine schematische Darstellung zur Erläuterung des der für die Ermittlung der Leistungskennziffern zugrunde gelegten vergleichenden Bewertungsverfahrens,
Fig. 8 die Wiedergabe von Ausschlußkriterien für die prinzipielle Anwendbarkeit von Maßnahmen am Beispiel der Verbundtrennung,
Fig. 9 Auswahlkriterien zur Spezifizierung der Durchführung am Beispiel der maschinellen Zerkleinerung,
Fig. 10 ein Ausschnitt ausgewählter Recyclingwege,
Fig. 11 der günstigste Recyclingweg,
Fig. 12 ein schematischer Aufbau mit Strömungsverhältnissen bei einem Aufwind- bzw. Steigrohrsichter (a),
Fig. 13 ein schematischer Aufbau mit Strömungsverhältnissen bei einem Zick-Zack-Sichter und
Fig. 14 eine Verfahrenskette zur Inlösungnahme des Haftvermittlers der Folie mit Rückgewinnung der Folie (ohne Haftvermittler und Schaumstoffanhaftungen) in sortenreiner Form.

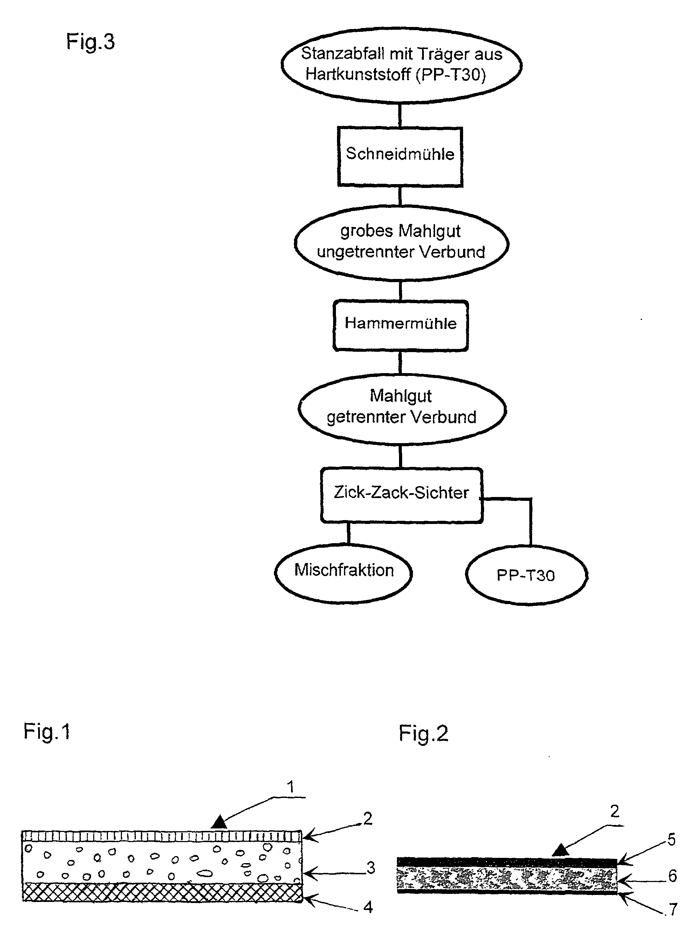

Das in Fig. 1 ausschnittweise im Querschnitt dargestellte Verbundbauteil 1 ist wie folgt aufgebaut:
- tragender, in der Regel dickwandiger als die äußere Folie ausgebildeten Träger 4 aus einem verstärkten Hartkunststoff, beispielsweise talkumverstärktes Polypropylen wie PP-T 30
- diesen Träger festhaftend umgebende Zwischenlage 3 aus Schaumstoff, z.B. Polyurethan und
- außenseitig darauf festhaftend angebrachte, flexible Folie 2, bei der es sich in der Regel auch um ein Verbundsystem handelt und deren wesentlicher Bestandteil beispielsweise ein Gemisch aus Acrylbutadienstyrol (ABS) und Polyvinylchlorid (PVC) darstellt.

Aus Fig. 2 geht ein ausschnittweiser Querschnitt durch die Folie 2 unter der Annahme hervor, daß es sich bei der Folie 2 um ein dreischichtiges Verbundbauteil mit einer Decklackschicht 5, einer Schicht aus z.B. einem Gemisch aus Acrylbutadienstyrol (ABS) und Polyvinylchlorid (PVC) 6 und einer Haftvermittlerschicht 7 handelt.

Fig. 3 gibt in Form eines Fließschemas eine Verfahrenskette wieder, die geeignet ist, das Trägermaterial als den Werkstoff mit dem höchsten Massenprozentanteil im Produkt in sortenreiner Form wiederzugewinnen. Gemäß Fig. 2 wird Stanzabfall mit Träger aus Hartkunststoff (PP-T 30) maschinell mittels einer Schneidmühle zu grob gemahlenen Verbundpartikeln (ungetrennter Verbund) vorzerkleinert, die anschließend mittels einer Hammermühle zu einem Mahlgut aus Hartkunststoff-(PP-T 30)-Krümeln und gröberen Partikelreststücken verarbeitet werden (getrennter Verbund), worauf aus dem den getrennten Verbund bildenden Mahlgut die Hartkunststoff-(PP-T 30)-Krümel mittels eines Zick-Zack-Sichters unter Zurücklassung einer Mischfraktion sortenrein zurückgewonnen werden.

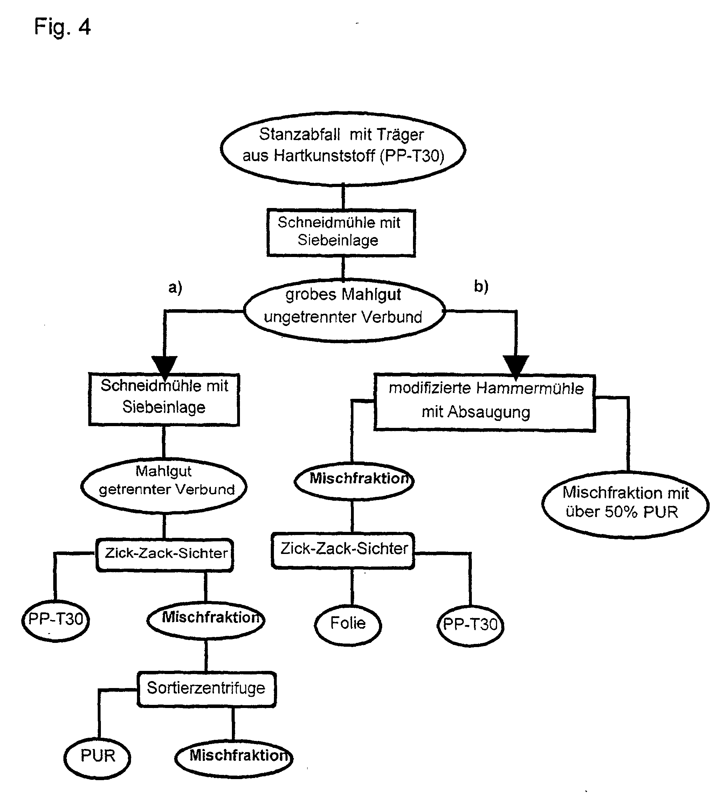

Aus den Fig. 4a und 4b gehen jeweils in Form eines Fließschemas weitere Verfahrensketten hervor, die geeignet sind, Schaumstoff und Trägermaterial bzw. Folien- und Trägermaterial sortenrein zurückzugewinnen. So wird gemäß Fig. 4a Stanzabfall mit einem Träger aus Hartkunststoff (PP-T 30) mittels einer Schneidmühle mit Siebeinlage zu grob gemahlenen Verbundpartikeln (ungetrennter Verbund) maschinell vorzerkleinert, die anschließend mittels einer weiteren Schneidmühle mit Siebeinlage zu einem Mahlgut aus Hartkunststoff-(PP-T 30)-Krümeln und gröberen Partikelreststücken (getrennter Verbund) verarbeitet werden. Aus dem den getrennten Verbund bildenden Mahlgut werden die Hartkunststoff-(PP-T 30)-Krümel dann mittels eines Zick-Zack-Sichters unter Zurücklassung einer Mischfraktion sortenrein zurückgewonnen. Das Trägermaterial wird mit hoher Ausbeute und hohem Reinheitsgrad erhalten. Die zurückgelassene, das Leichtgut darstellende Mischfraktion wird in einem weiteren Sortierschritt einer Sortierzentrifuge zugeführt, wobei als Trennmedium Wasser verwendet und sortenreiner PUR-Schaumstoff zurückgewonnen wird.

Bei der Verfahrenskette gemäß Fig. 4b wird ebenfalls Stanzabfall z.B. aus der Fertigung eines Armaturentafelgrundkörpers mit einem Träger aus Hartkunststoff (PP-T 30) mittels einer Schneidmühle mit Siebeinlage zu grobem Mahlgut maschinell vorzerkleinert (ungetrennter Verbund). Strategisches Ziel ist hier die Rückgewinnung von Trägermaterial und Folie in sortenreiner Form. Zur Trennung des Verbundes erfolgt die maschinelle Zerkleinerung mittels einer modifizierten Hammermühle mit Absaugung. Bei dieser maschinellen Zerkleinerung in der Hammermühle handelt es sich um einen chargenweisen Betrieb, wobei die Beladung des Mahlraums in einer solchen Größenordnung erfolgt, daß vorwiegend der Schaumstoff zerkleinert wird und bei der Folie und dem Trägermaterial verstärkt der Effekt des Abschalens des Schaumstoffs zum Tragen kommt und die kleineren Schaumstoffpartikel durch eine Siebeinlage ständig mit Hilfe einer Absaugung entfernt werden. Die gröberen Teile der Mischfraktion, die überwiegend Folie und Trägermaterial beinhaltet, werden chargenweise durch Öffnen einer Austragsklappe aus der Hammermühle entfernt. Zur Sortierung von Folie und Trägermaterial wird ein Zick-Zack-Sichter eingesetzt, wobei als Eigenschaftsunterschiede insbesondere die Formunterschiede ausgenutzt werden.

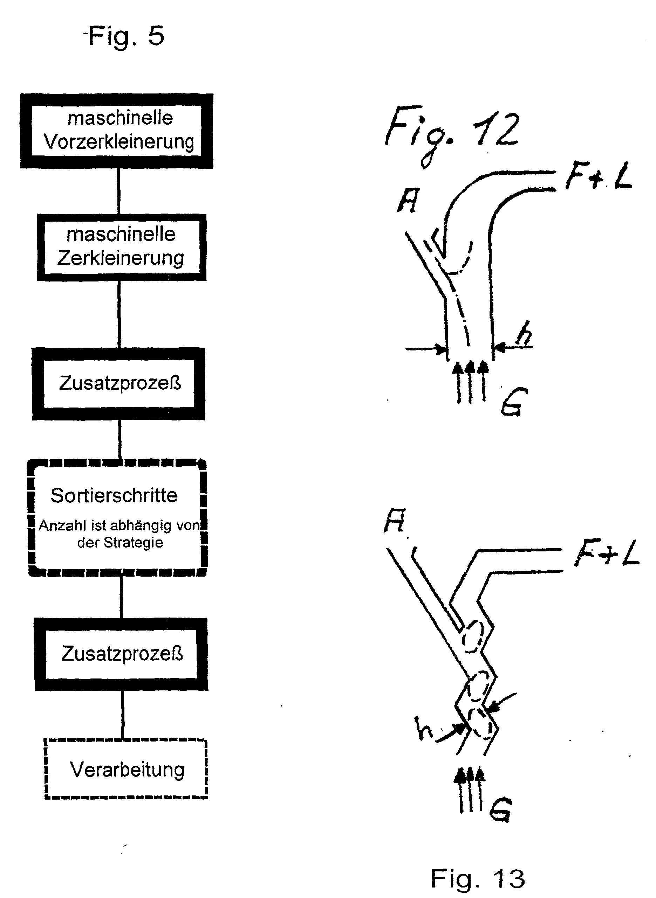

Fig. 5 zeigt schematisch eine allgemeine Verfahrenskette für Produkte des Aufbaus nach den Fig. 1 und 2 am Beispiel von Stanzabfällen.

Bei Produkten wie den Stanzabfällen, deren maximale Abmessungen wie bei den Stanzabfällen in der Größenordnung von 200 x 350 mm (Wanddicke: 3 ... 10 mm) liegen, ist eine einstufige Vorzerkleinerung ausreichend, die bei dem beschriebenen Aufbau mit Folie, Schaumstoff und Kunststoffträgerteil (Stanzabfall) bevorzugt in einer Schneidmühle durchgeführt werden sollte. Im Falle von größeren Abmessungen ist mindestens eine weitere Vorzerkleinerungsstufe hinzuzufügen, wobei eine langsamer als die Schneidmühle laufende Zerkleinerungsmaschine z.B. ein Mehrwellenzerkleinerer oder ein Schneidgranulator eingesetzt werden sollte.

Eine maschinelle Zerkleinerung als Maßnahme der Verbundtrennung sollte bei dem besagten Verbundbauteil entweder mit Zerkleinerungsgeräten durchgeführt werden, die nach Prall- bzw. Schlagbeanspruchung arbeiten (vorzugsweise Umdrehungszahlen von über 1000 Umdrehungen pro Minute und Siebeinlage bei Hammermühle mit Lochweitendurchmesser nicht über 12 mm oder mit Prallmühle mit einer Prallflächenmahlbahn beispielsweise mit 1/4 Teilung und einer Spaltweite über 7,5 mm aber unter 12 mm oder aber Schneidmühle (Schneiden als Beanspruchungsart), wobei eine Siebeinlage einzusetzen ist, deren Lochweitendurchmesser bevorzugt bei 5 oder 6 mm liegen sollte. Die Wahl der Zerkleinerungsmaschine ist ausgerichtet auf die nachfolgenden Werkstoffsortierschritte. Bei Einsatz eines Freifallscheiders oder einer Sortierzentrifuge ist die Verbundtrennung bevorzugt mit der genannten Schneidmühlenzerkleinerung durchzuführen. Der Aufschlußgrad (Grad der Verbundtrennung) liegt in der Größenordnung von 98 % und höher.

Ein Zusatzprozeß ist dann notwendig, wenn die für den Einsatz nachfolgender Sortierverfahren notwendigen Voraussetzungen nicht erfüllt sind, wie dies z.B. bei Verwendung eines Freifallscheiders der Fall ist (Voraussetzung: Restfeuchte weit unter 1 %, d.h. gegebenenfalls Trocknungsprozeß sowie eine Vorbehandlung, um Unterschiede im triboelektrischen Aufladungsverhalten der Werkstoffe gezielt zu beeinflussen bzw. zu verstärken, sowie Korngröße < 8 mm, d.h. eventuell zusätzlicher Zerkleinerungsprozeß).

Die Anzahl der erforderlichen Werkstoffsortierschritte hängt von der Strategie ab; bei Strategie Folie, Schaumstoff und Trägermaterial in möglichst sortenreiner Form zurückzugewinnen, sind maximal drei Sortierschritte erforderlich. Die Abtrennung des Trägermaterials (hier PP-T 30) sollte bei Einsatz eines "trockenen Verfahrens" bevorzugt mit einem Zick-Zack-Sichter erfolgen, wobei die Verbundtrennung mit einer Zerkleinerungsmaschine, die nach Prallbzw. Schlagbeanspruchung arbeitet, oder mit einer Schneidmühle erfolgen kann. Beispiel: Eine Sortierung mit Freifallscheider eignet sich insbesondere zur Sortierung einer Fraktion, die überwiegend aus PP-T 30 und PVC/ABS-Folie besteht, da die triboelektrische Aufladung gegensinnig ist. Die o.g. Voraussetzungen müssen erfüllt sein, sowie der PUR-Schaumstoff durch ein anderes Verfahren abgetrennt sein muß.

Ist ein "nasses" Sortierverfahren wie bei der Sortierzentrifuge angewendet worden, so ist als Zusatzprozeß vor der Verarbeitung ein Trocknungsschritt voranzustellen oder bei Einsatz eines anderen flüssigen Sortiermediums als Wasser (z.B. Salzlösung) ein Wasch- und Trocknungsschritt. Anschließend ist eine Verarbeitung möglich.

In Fig. 6a ist eine Verfahrenskette zur Rückgewinnung von Folie, Schaumstoff und Trägermaterial in sortenreiner Form aus einem Stanzabfall mit Träger aus Hartkunststoff (PP-T 30) dargestellt, mit der ein Materialrecycling mit Wieder- und Weiterverwendung durchgeführt werden kann. Zur Vorzerkleinerung wird eine Schneidmühle mit Siebeinlage zur Beeinflussung der maximalen Korngröße eingesetzt. Bei Einsatz eines Lochsiebes sollte der Lochweitendurchmesser im Bereich von 20 bis 30 mm liegen. Die Vorzerkleinerung stellt einen Zusatzprozeß dar, der den Vorteil hat, daß bei einem nachfolgenden Zerkleinerungsschritt ein kleinerer Maschinentyp verwendet werden kann, der nur auf die gewünschte Durchsatzleistung ausgerichtet sein und nicht aufgrund der andernfalls vorliegenden Aufgabestückgröße überdimensioniert werden muß. Eine Verbundtrennung ist damit nicht verbunden.

Der nachfolgende maschinelle Zerkleinerungsschritt dient der Trennung des Verbundes (Aufschluß). Dazu kann eine Zerkleinerungsmaschine eingesetzt werden, die - wie das bei einer Hammermühle der Fall ist - den Bruch aufgrund einer Prallbeanspruchung herbeiführt. Damit wird unter bestimmten Voraussetzungen ein mit 98 % und höher ausreichend guter Aufschlußgrad erzielt. Ebenso wie bei der Vorzerkleinerung ist eine Siebeinlage zu verwenden. Maßgebliche Voraussetzungen für den hohen Aufschlußgrad sind die Anwendung einer Siebeinlage sowie der ausgewählte Drehzahlbereich. Bei Verwendung eines Lochsiebes sollte der Lochweitendurchmesser nicht über 12 mm liegen. Die Hammermühle sollte mit relativ hohen Rotordrehzahlen betrieben werden. Erfolgreiche Untersuchungsergebnisse wurden bei Umdrehungszahlen über 1000 min⁻¹ erreicht.

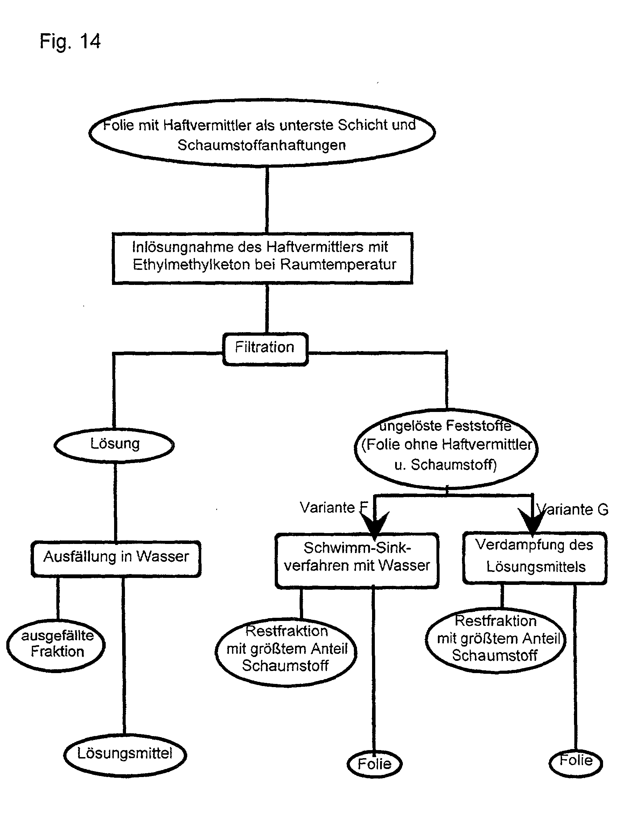

Die aus der maschinellen Zerkleinerung resultierende gemischte Werkstofffraktion wird einem ersten Sortierschritt zugeführt, um das PP-T 30 aus dem Träger in hoher Ausbeute und mit hohem Reinheitsgrad zu erhalten. Zum Sortieren stehen eine Reihe von Verfahren zur Verfügung, die auf der Ausnutzung von verschiedenen Eigenschaftsunterschieden hinsichtlich des Produktaufbaus mit den zu trennenden Werkstoffen beruhen. Um eine Werkstoffsortierung über Windsichtung zu erzielen, sollten sich die zu trennenden Materialien in Dichte und/oder Kornform und/oder Korngröße unterscheiden. Ein dazu geeignetes Verfahren ist die Windsichtung, wobei als spezieller Gerätetyp ein Zick-Zack-Sichter eingesetzt wird, wie er schematisch aus Fig. 12 hervorgeht. Dabei handelt es sich um ein senkrechtes Rohr mit einer mehr oder weniger großen Anzahl von Knickstellen, das von unten her mit Luft durchströmt wird. Das zu trennende Gut wird von oben bzw. an einer der Knickstellen aufgegeben. Im Unterschied zu einem Aufwind- bzw. Steigrohrsichter, dessen Aufbau schematisch in Fig. 12 dargestellt ist und der herkömmlich zur Werkstoffsortierung eingesetzt wird, handelt es sich bei einem Zick-Zack-Sichter nicht um eine Schwerkraftsichtung, sondern um eine Sichtung in sogenannten "Wirbelwalzen". An jeder Knickung des Rohres entsteht eine "Wirbelwalze", in der sich ein Sichtvorgang abspielt. Eine laminare, wirbelarme Strömung wie bei dem in Fig. 12 schematisch dargestellten Aufwind- bzw. Steigrohrsichter liegt daher bei dem Zick-Zack-Sichter gemäß Fig. 13 nicht vor. Der Formeinfluß kann den Sortierprozeß unterstützen, ihn aber auch einschränken; letzteres dann, wenn die Partikelform die Dichtedifferenz kompensiert. Dies ist in diesem Fall beim Schaumstoff und dem Folienmaterial der Fall. So werden das flächige Folienmaterial und bezüglich der Dichte weit unter den Werten von Folie und PP-T 30 liegende Schaumstoff gemeinsam als Leichtfraktion mit dem Luftstrom nach oben ausgetragen, während das talkumverstärkte Polypropylen aus dem Träger als Schwergut ausgetragen wird.

Um die Leichtfraktion nach Polyurethanschaumstoff und Folie zu sortieren, ist, wie oben erläutert, ein Windsichter nicht geeignet, da sich die Eigenschaftsunterschiede von Geometrie und Dichte in einem solchen Sortiergerät kompensieren und somit eine erfolgreiche Trennung aufgrund des daraus resultierenden ähnlichen Verhaltens nicht möglich ist. Hier bietet sich als geeignetes Verfahren zur Sortierung der Einsatz eines Aeroherdes an, dessen Sortierprinzip im wesentlichen auf der Ausnutzung von Dichteunterschieden beruht. Bei dem Aeroherd gelangt das zu sortierende Werkstoffgemisch über einen Produkteinlauf zur mitschwingenden Speisevorrichtung und wird dort auf die Maschinenbreite verteilt und auf das längsgeneigte Sieb aufgegeben. Auf der luftdurchströmten Siebfläche wird das Produkt fluidisiert und entsprechend dem spezifischen Gewicht getrennt. Die leichteren Schaumstoffpartikel wandern dabei zur tieferliegenden Siebkante als Herdunterlauf, während die Fraktion, die überwiegend Folienpartikel aber auch noch Fehlaustrag von PP-T 30 - Trägermaterial enthält, als Herdüberlauf an der höherliegenden Siebkante ausgetragen wird. Bei dieser Sortierstufe wird insbesondere der PUR-Schaumstoff mit hoher Ausbeute und Sortenreinheit zurückgewonnen. Der dritte Sortierprozeß soll optimiert auf die Rückgewinnung der Folie in sortenreiner Form durchgeführt werden. Es kann davon ausgegangen werden, daß hierzu insbesondere der in der Herdüberlauffraktion vorliegende Fehlaustrag von PP-T 30 entfernt werden muß. Dazu kann wiederum ein Zick-Zack-Sichter eingesetzt werden, wie aus Fig. 6a ersichtlich ist.

Der aus Fig. 6b hervorgehenden Verfahrenskette liegt ebenfalls als strategisches Ziel die Rückgewinnung von Trägermaterial, Folie und Schaumstoff in sortenreiner Form bei Verwendung von Stanzabfall aus der Fertigung des Armaturentafelgrundkörpers zugrunde, der als Verbundbauteil gemäß Fig. 1 mit einem Träger aus Hartkunststoff (PP-T 30) aufgebaut ist. Im Anschluß an die maschinelle Vorzerkleinerung, die hier wie bei der Verfahrenskette gemäß Fig. 6a vor sich geht, erfolgt die maschinelle Zerkleinerung zur Verbundtrennung mit einer Schneidmühle mit Siebeinlage. Gute Ergebnisse des Aufschlußgrades ergeben sich bei Verwendung einer Siebeinlage mit Rundlochung und einem Lochweitendurchmesser von 6 mm. Die daraus resultierende Zerkleinerungsfraktion, in der die verschiedenen Werkstoffe gemischt vorliegen, wird nachfolgend zur Sortierung in die Sortierzentrifuge eingebracht. Die zu trennende Mischfraktion wird als Suspension axial in die Zentrifuge durch ein stehendes Rohr aufgegeben und trifft auf die Oberfläche des mit hoher Drehzahl (bis 1500-fache Beschleunigung) umlaufenden Wasserrings. Die Teilchen mit höherer Dichte als die des Wassers sinken zum Zentrifugenmantel hin ab, während die mit geringerer Dichte als Wasser aufschwimmen. Im konischen Teil findet eine Entwässerung statt. Bei der Durchführung mit Wasser als Trennmedium resultiert als Ergebnis eine Schwimmfraktion aus PUR-Schaumstoff mit sehr hohem Reinheitsgrad. Die Sinkfraktion wird zur weiteren Sortierung erneut der Sortierzentrifuge zugeführt. Als Trennmedium kommt eine Salzlösung zum Einsatz, deren Dichte in der Größenordnung von 1,14 g/cm³ eingestellt ist. Bevorzugt sollte dafür eine Kochsalzlösung eingesetzt werden. Aus diesem Sortierschritt erhält man als Sinkfraktion die Folie mit hoher Ausbeute und hohem Reinheitsgrad. Die Schwimmfraktion, die außer dem großen Anteil PP-T 30 auch noch einen höheren Anteil PUR-Schaumstoff aufweist, wird getrocknet und einem Zick-Zack-Sichter zugeführt. Der Luftstrom wird so eingestellt, daß der PUR-Schaumstoff als Leichtfraktion oben ausgetragen wird.

Auch der erfindungsgemäßen Verfahrenskette nach Fig. 6c liegt als strategisches Ziel die Rückgewinnung von Trägermaterial, Folie und Schaumstoff in sortenreiner Form bei Verwendung von Stanzabfall aus der Fertigung des Armaturentafelgrundkörpers, der als Verbundbauteil gemäß Fig. 1 mit einem Träger aus Hartkunststoff (PP-T 30) aufgebaut ist, zugrunde. Nach erfolgter maschineller Vorzerkleinerung wie bei der Verfahrenskette gemäß Fig. 6a wird die maschinelle Zerkleinerung zur Trennung des Verbundes wie bei der Verfahrenskette nach Fig. 4b in einer Hammermühle im chargenweisen Betrieb durchgeführt, wobei die Beladung des Mahlraums wiederum in einer solchen Größenordnung erfolgt, daß vorwiegend der Schaumstoff zerkleinert wird und bei der Folie und dem Trägermaterial verstärkt der Effekt des Abschälens des Schaumstoffs zum Tragen kommt und die kleineren Schaumstoffpartikel durch eine Siebeinlage ständig mit Hilfe einer Ansaugung entfernt werden. Die gröberen Teile der Mischfraktion, die überwiegend Folie und Trägermaterial beinhaltet, wird chargenweise durch Öffnen einer Austragsklappe aus der Hammermühle entfernt. Zur Sortierung von Folie und Trägermaterial wird ein Zick-Zack-Sichter eingesetzt, wobei als Eigenschaftsunterschied insbesondere die Formunterschiede ausgenutzt werden. Zur Rückgewinnung von PUR-Schaumstoff in sortenreiner Form wird die abgesaugte Fraktion einem Sortierschritt mit Aeroherd zugeführt.

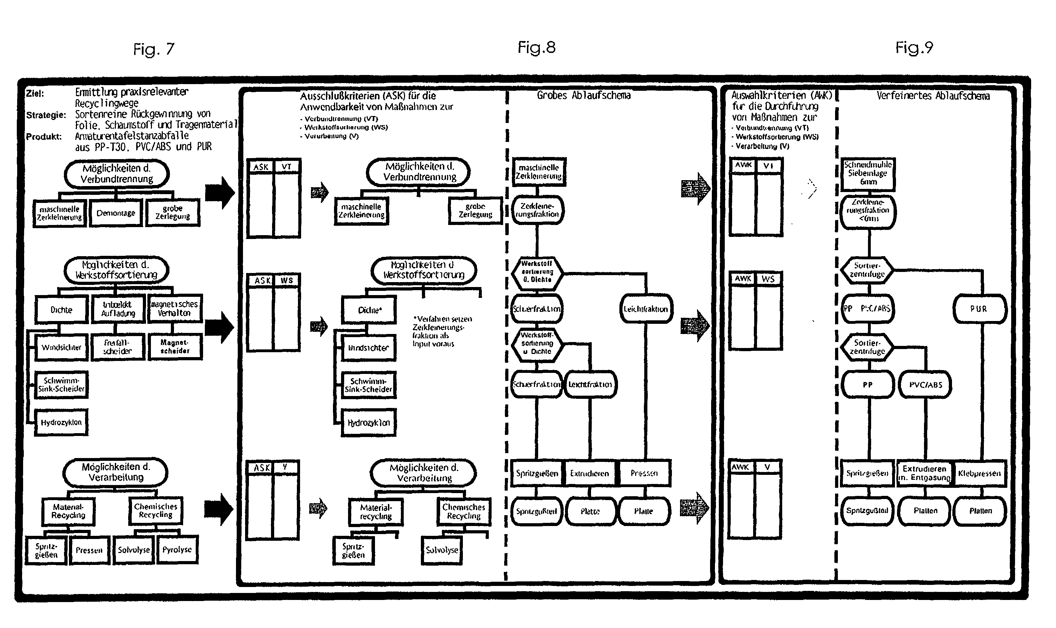

Fig. 7 beinhaltet eine schematische Darstellung, die der Erläuterung der für die Ermittlung der Leistungskennziffern der dem Verfahren zugrunde gelegten vergleichenden Bewertung dient, wobei das Ziel die Ermittlung praxisrelevanter Recyclingwege für die sortenreine Rückgewinnung von Folie, Schaumstoff und Trägermaterial bei Verwendung von Armaturentafelstanzabfällen aus PP-T 30, PVC/ABS und PUR ist. Wie aus der Schautafel nach Fig. 7 hervorgeht, sind zunächst die Möglichkeiten der Verbundtrennung wie maschinelle Zerkleinerung, Demontage, grobe Zerlegung, die Möglichkeiten der Werkstoffsortierung nach Dichte, triboelektrischer Aufladung oder magnetischem Verhalten und die Möglichkeiten der Verarbeitung wie Materialrecycling oder chemisches Recycling ins Auge zu fassen. Dabei kommen für die Werkstoffsortierung nach der Dichte Windsichter, Schwimm-Sink-Scheider und Hydrozyklen, nach der triboelektrischen Aufladung Freifallabscheider sowie Magnetscheider bei Sortierung nach dem magnetischen Verhalten in Frage. Die Weiterverarbeitung beim Materialrecycling erfolgt durch Spritzgießen oder Pressen und bei dem chemischen Recycling durch Solvolyse oder Pyrolyse.

In der schematischen Darstellung der Fig. 8 sind die Ausschlußkriterien (ASK) für die Anwendbarkeit von Maßnahmen zur Verbundtrennung (VT), Werkstoffsortierung (WS) und Verarbeitung in der linken Hälfte und ein grobes Ablaufschema in der rechten Hälfte angegeben, wobei die Darstellung in der linken Hälfte in Fig. 8 im wesentlichen der Fig. 7 entspricht. Die Verfahren der Werkstoffsortierung setzen jeweils eine Zerkleinerungsfraktion als Input voraus. Wie das grobe Ablaufschema zeigt, erfolgt nach vorausgehender maschineller Zerkleinerung die Sortierung der Werkstoffe der Zerkleinerungsfraktion über die Dichte in einer ersten Stufe, wobei sich eine Schwer- und eine Leichtfraktion ergeben. Die Schwerfraktion wird in einer zweiten Sortierstufe abermals über die Dichte der Werkstoffe in eine Schwerfraktion und eine Leichtfraktion sortiert. Die Verarbeitung der Schwerfraktion geschieht dann durch Spritzgießen in Spritzgußteile, während die Leichtfraktion der ersten und der zweiten Sortierstufe durch Pressen zu Platten bzw. durch Extrudieren zu Platten verarbeitet wird.

Aus Fig. 9 gehen dann die Auswahlkriterien (AWK) für die Durchführung von Maßnahmen zur Verbundtrennung (VT), zur Werkstoffsortierung (WS) und zur Verarbeitung am Beispiel eines verfeinerten Ablaufschemas hervor. Dieses zeigt den Einsatz einer Schneidmühle mit Siebeinlage mit 6 mm Lochdurchmesser zur maschinellen Zerkleinerung. Die resultierende Zerkleinerungsfraktion mit einer Korngröße kleiner als 6 mm wird einer Sortierzentrifuge eingegeben, durch die die Trennung in eine Mischfraktion PP, PVC/ABS und PUR erfolgt. Der sortenreine PUR-Schaumstoff wird durch Klebpressen unmittelbar zu Platten weiterverarbeitet. Die Mischfraktion wird erneut in einer Sortierzentrifuge zu sortenreinem PP und PVC/ABS getrennt, worauf das PP durch Spritzgießen zu Spritzgußteilen und das PVC/ABS durch Extrudieren mit Entgasung zu Platten verarbeitet wird.

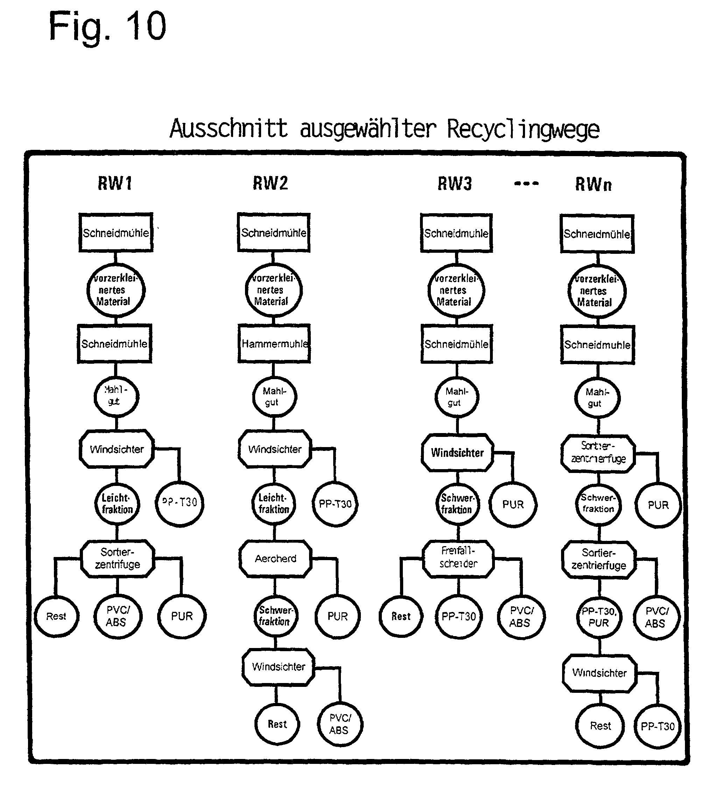

Fig. 10 gibt schaubildartig einen Ausschnitt ausgewählter Recyclingwege (RW) wieder, die als Grundlage der Bewertung für die Strategie der sortenreinen Rückgewinnung von Folie, Schaumstoff und Trägermaterial z.B. bei Dreistoff-Verbundbauteilen mittels eines Punktsystems (Leistungskennziffern) für festgelegte Nutzenklassen dient, wie es unten aufgeführt ist. Da die ausgewählten Recyclingwege RW1, RW2, RW3 ... RWn infolge der vorgesehenen Beschriftung aus sich heraus verständlich sind, wird auf letztere verwiesen.

Nachfolgende Tabelle gibt die Aufwandsbewertung mit Punktsystem für festgelegte Nutzenklassen wieder, wobei die Einteilung der Nutzenklassen mit Kriterien wie Reinheitsgrad in %, Ausbeute in % sowie Art und prozentualer Anteil von Verunreinigung vorgenommen ist.

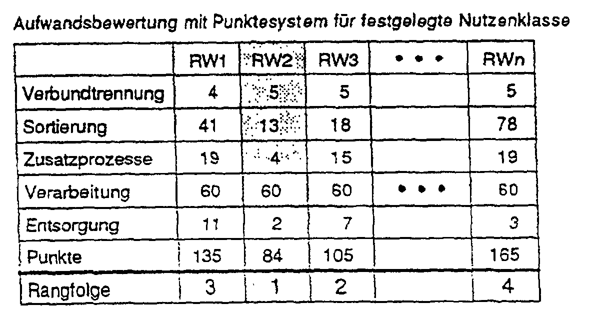

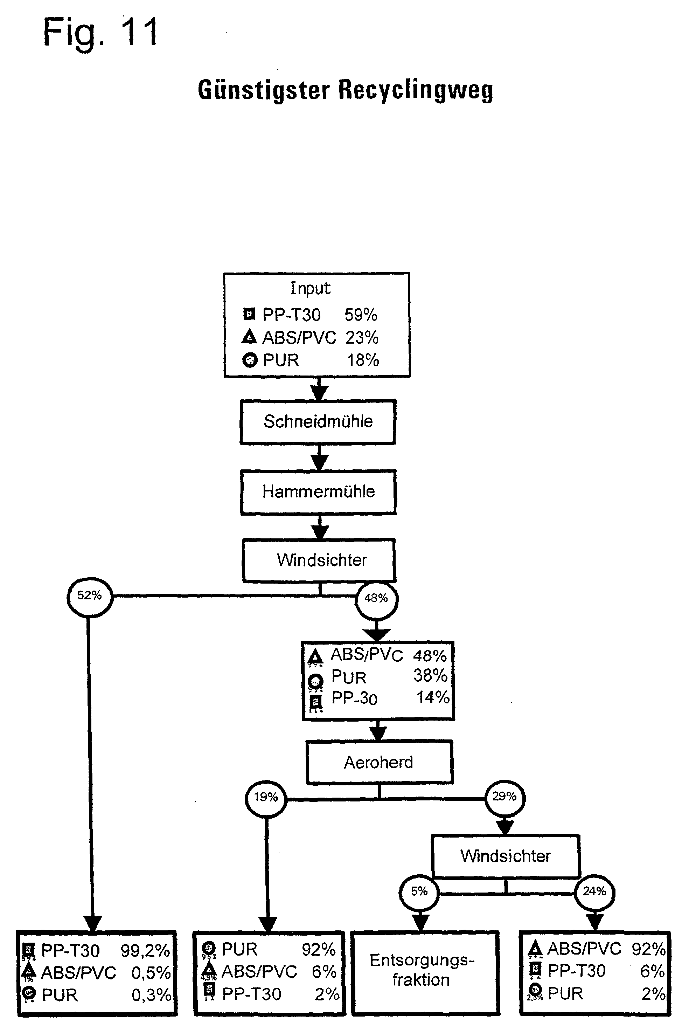

Fig. 11 gibt schaubildartig den günstigsten Recyclingweg wieder. Als Input ist ein Verbundbauteil mit der Zusammensetzung PP-T 30 59 %, ABS/PVC 23 % und PUR 18 % vorgesehen, wobei die maschinelle Vorzerkleinerung (ungetrennter Verbund) und die maschinelle Zerkleinerung (getrennter Verbund) mittels einer Schneidmühle bzw. einer Hammermühle erfolgen, worauf sich drei Sortierstufen anschließen. Nach der ersten Sortierstufe mittels eines Windsichters ergibt sich eine Schwerfraktion zu 52 %, die annähernd sortenrein aus PP-T 30 (99,2 %) mit 0,5 % ABS/PVC-Anteil und 0,3 % PUR-Anteil besteht. Eine Leichtfraktion von 48 %, die sich aus ABS/PVC 48 %, PUR 38 % und PP-30 T 14 % zusammensetzt, wird in einer zweiten Sortierstufe mittels eines Aeroherdes sortiert, und zwar in eine annähernd sortenreine 11 % Fraktion mit Anteilen von PUR 92 %, ABS/PVC 6 % und PP-T 30 von 2 %. Eine Mischfraktion von 29 % wird in einer dritten Sortierstufe mittels eines Windsichters zu einer annähernd sortenreinen 24 %igen Fraktion mit Anteilen von 92 % ABS/PVC, 6 % PP-T 30 und 2 % PUR sowie eine Entsorgungsfraktion von 5 % getrennt.

Fig. 14 veranschaulicht eine Verfahrenskette zur Inlösungnahme des Haftvermittlers der Folie mit Rückgewinnung der Folie ohne Haftvermittler und Schaumstoffanhaftungen in sortenreiner Form. Wie das Ablaufschema zeigt, weist die Folie als unterste Schicht einen Haftvermittler und Schaumstoffanhaftungen auf. Die Folie wird in einen Behälter mit Lösungsmittel, bevorzugt Ethylmethylketon zur Inlösungnahme des Haftvermittlers bei Raumtemperatur eingebracht, worauf eine Filtration der Lösung derart erfolgt, daß einerseits die angelösten Feststoffe wie Folie ohne Haftvermittler und im wesentlichen Schaumstoff und andererseits die Lösung erhalten werden. Zur Rückgewinnung des Lösungsmittels wird dann die Lösung einer Ausfällung mit Wasser unterzogen, wobei neben dem Lösungsmittel eine ausgefällte Fraktion erhalten wird.

Zur Rückgewinnung der Folie werden die ungelösten Feststoffe entweder einem Schwimm-Sink-Verfahren mit Wasser ausgesetzt (Variante A), wobei sich über die Dichteunterschiede die sortenreine Folie und eine Restfraktion mit größtem Anteil Schaumstoff ergeben, oder nach einer Variante B werden die ungelösten Feststoffe einem Verdampfungsvorgang zur Verdampfung des Lösungsmittels ausgesetzt, wobei sich die sortenreine Folie und eine Restfraktion mit größtem Anteil Schaumstoff ergeben.

## Patentansprüche

1. Verfahren zum Zerlegen und sortenreinen Trennen von zu recyclierenden Dreistoff-Verbundbauteilen (1) mit einem den größten Masseanteil aufweisenden und den Träger bildenden Hartkunststoff einer auf dem Träger (4) festhaftend aufgebrachten Zwischenlage (3) aus Schaumstoff und einer auf letzterer außenseitig festhaftend aufgebrachten, flexiblen Folie (2), indem die Verbundbauteile (1) in mindestens einer Arbeitsstufe zu einem ungetrennten Verbund mittels einer Schneidmühle mit Siebeinlage vorzerkleinert, darauf zu einem getrennten Verbund maschinell zerkleinert und die resultierenden Werkstofffraktionen mindestens einer Werkstoffsortierung unterworfen, getrennt und dann aus dem Verfahrensablauf ausgeschieden und/oder weiterverarbeitet werden, **dadurch gekennzeichnet, daß** der ungetrennte Verbund chargenweise mittels einer modifizierten Hammermühle mit Absaugung zum getrennten Verbund, bestehend aus einer gemahlenen gröberen Mischfraktion aus Folienteilchen und Hartkunststoff- Krümeln sowie einer abgesaugten Mischfraktion mit über 50 m% PUR-Schaumstoff, verarbeitet wird, worauf die gröbere Mischfraktion mittels eines Zick-Zack-Sichters in sortenrein rückgewonnene Folienteilchen und Hartkunststoff- Krümel getrennt wird, während aus der Mischfraktion mit über 50 m% PUR Schaumstoff mittels eines Aeroherdes sortenreiner PUR-Schaumstoff rückgewonnen wird.

## Claims

1. Method for the decomposition and separation by type of recyclable three-material composite components (1) with hard plastic which has the largest mass portion and forms the carrier (4), an intermediate layer (3) of foamed material which is adherently fixed on the carrier (4) and a flexible foil (2) which is adherently fixed on the exterior of the intermediate layer (3) in that the composite components (1) are coarsely crushed by means of a granulator with sieve inset in at least one work phase to form a non-separated compound and are then mechanically crushed thereon to form a separate compound and the resulting material fractions are at least subjected to one material sorting, that they are separated and then either discharged from the process cycle and/or further processed **characterized in that** that the non-separated compound is processed in batches by means of a modified swing-hammer crusher with extraction into a separated compound; consisting of a crushed, coarser mixed fraction of foil particles and small hard plastic bits as well as a mixed fraction extracted with more than 50m% PUR-foamed material on which the coarser mixed fraction is separated by means of a zigzag sifter into foil particles and small hard plastic bits recycled by type whilst PUR-foamed material is recycled by type from the mixed fraction with more than 50m% PUR-foamed material by means of a pneumatic processing table.

## Revendications

1. Procédé pour la décomposition et la séparation par types d'éléments de construction composites à trois matières recyclables (1) avec une matière plastique dure présentant la fraction pondérale majeure et constituant le support (4), une couche intermédiaire (3) en mousse appliquée de manière adhésive sur le support (4) et une feuille flexible (2) appliquée de manière adhésive sur la face extérieure de cette dernière en broyant préalablement moyennant un broyeur à couteaux avec filtre inséré en au moins une phase de travail les éléments de construction composites (1) en vue d'obtenir un compound non séparé, en les broyant ensuite mécaniquement pour obtenir un compound séparé et en soumettant les fractions de matières en résultant à au moins un triage de matières en les séparant et les éliminant ensuite du procédé et/ou en les transformant ultérieurement, **caractérisé par le fait que** le compound non séparé est, moyennant un broyeur à marteaux modifié avec aspiration, transformé par charges en compound séparé consistant en une fraction de broyage mixte plus grossière de particules de feuille et de miettes de matière plastique dure ainsi que en une fraction mixte aspirée avec plus de 50 m% de mousse PUR, ensuite la fraction mixte grossière est, moyennant un crible à zigzag, séparée en particules de feuille récupérées par types et en miettes de matière plastique dure tandis qu'à partir de la fraction mixte avec plus de 50 m% de mousse PUR une mousse PUR est récupérée par types moyennant une aérotable.
